# EUROPEAN PATENT APPLICATION

(11) **EP 4 775 336 A2**
(43) Date of publication of application: **15.07.2026**
(21) Application number: 26151117.4
(22) Date of filing: 09.01.2026
(51) Int. Cl.: B23B 45/00, B25B 23/147, B25D 16/00

(54) **POWER TOOL**

(30) Priority: 10.01.2025 CN 202520070164 U
(71) Applicant: Techtronic Cordless GP, Anderson, SC 29621 (US)
(72) Inventor: DENG, Hai Peng, Dongguan City (CN); XIONG, Guo Hui, Dongguan City (CN); WANG, Wei Bing, Dongguan City (CN); LI, Young Min, Dongguan City (CN); YANG, Chao Kun, Dongguan City (CN); WEN, Chao, Dongguan City (CN); XIE, Huan Fa, Dongguan City (CN)
(74) Representative: Meissner Bolte Partnerschaft mbB

(57) **Abstract**

A power tool includes: a working component configured to rotate around a working axis; a motor arranged on the working axis on a rear side of the working component and configured to drive an output shaft to rotate; a transmission arranged on the working axis between the motor and the working component, configured to connect the output shaft of the motor with the working component; a main housing configured to at least partially enclose the motor and the transmission, the main housing having a long axis parallel to the working axis, wherein the working component is at least partially enclosed at a front end of the main housing; a handle housing extending from the main housing in a direction away from the working axis; a trigger control arranged to protrude from a front side of the handle housing, the trigger control configured to send a signal for controlling the motor; and an electronic clutch dial; a speed switch; a mode switch and corresponding configurations.

## Description

### FIELD OF THE DISCLOSURE

The present invention relates to a power tool, and in particular, to a power tool having an automatic torque output adjustment function.

### BACKGROUND OF THE DISCLOSURE

With the development of power tools, the application scenarios required by customers are becoming increasingly complex. However, for indoor decoration use and some industrial applications, traditional power tools generally use a mechanical torque ring to achieve different torque outputs. This can result in power tools being unable to meet customer requirements due to the application of incorrect torque levels, or the application of a torque level which is unsuitable to the application scenario.

The present invention discloses a new type of brushless high-power power tool to meet the aforementioned customer needs.

### SUMMARY OF THE DISCLOSURE

Various aspects and advantages of the present invention will be partly set forth in the following description, or may become apparent from the description, or may be learned through practicing the present invention.

According to a first aspect of the present invention, a power tool is provided. The power tool may include a working component configured to rotate around a working axis; a motor arranged on the working axis on a rear side of the working component and configured to drive an output shaft to rotate; a transmission arranged on the working axis between the motor and the working component, configured to connect the output shaft of the motor with the working component; a main housing configured to at least partially enclose the motor and the transmission, the main housing having a long axis parallel to the working axis, wherein the working component is at least partially enclosed at a front end of the main housing; a handle housing extending from the main housing in a direction away from the working axis; a trigger control arranged to protrude from a front side of the handle housing, the trigger control configured to send a signal for controlling the motor; and an electronic clutch dial arranged to protrude from a rear end of the main housing underneath the motor, the electronic clutch dial configured to send a signal for adjusting a torque output of the transmission.

The electronic clutch dial may be arranged to about an axis perpendicular to the working axis.

The electronic clutch dial may be linked to a potentiometer or rotary encoder configured to detect a rotation of the electronic clutch dial.

The handle housing may include a terminal housing arranged at an end of the handle housing distal from the main housing, the terminal housing configured to at least partially enclose a control board and a battery terminal.

Alternatively, the electronic clutch dial may be arranged to protrude from a rear face or side face of the handle housing, the electronic clutch dial configured to send a signal for adjusting a torque output of the transmission.

The electronic clutch dial may be arranged to rotate about an axis parallel to a long axis of the handle housing.

The electronic clutch dial may be arranged adjacent to the terminal housing.

According to a second aspect of the present invention, a power tool is provided. The power tool may include a working component configured to rotate around a working axis; a motor arranged on the working axis on a rear side of the working component and configured to drive an output shaft to rotate; a transmission arranged on the working axis between the motor and the working component, configured to connect the output shaft of the motor with the working component; a main housing configured to at least partially enclose the motor and the transmission, the main housing having a long axis parallel to the working axis, wherein the working component is at least partially enclosed at a front end of the main housing; and a speed switch at least partially enclosed within the main housing and configured to slide between a first position corresponding to a first speed mode and a second position corresponding to a second speed mode. The speed switch may include an internal structure having at least one permanent magnet mounted thereon; a slider arranged to extend from the internal structure to protrude from the main housing for actuation by a user; and a control board arranged adjacent to the internal structure and comprising a Hall sensor mounted thereon in a position which is aligned with the permanent magnet, wherein when the speed switch is in the first position, the permanent magnet is urged adjacent to the Hall sensor with a sensor signal generated, and when the speed switch is in the second position, the permanent magnet is urged away from the Hall sensor with no sensor signal generated.

Alternatively, the control board may be arranged adjacent to the internal structure and comprising a first Hall sensor and a second Hall sensor mounted thereon, the first Hall sensor mounted in a position which is aligned with the permanent magnet when the speed switch is in the first position, the second Hall sensor mounted in a position which is aligned with the permanent magnet when the speed switch is in the second position.

According to a third aspect of the present invention, a power tool is provided. The power tool may include a working component configured to rotate around a working axis and configured to operate in a drill mode or a hammer mode; a motor arranged on the working axis on a rear side of the working component and configured to drive an output shaft to rotate; a transmission arranged on the working axis between the motor and the working component, configured to connect the output shaft of the motor with the working component; a main housing configured to at least partially enclose the motor and the transmission, the main housing having a long axis parallel to the working axis, wherein the working component is at least partially enclosed at a front end of the main housing; a handle housing extending from the main housing in a direction away from the working axis, the handle housing comprises a terminal housing arranged at an end of the handle housing distal from the main housing, the terminal housing configured to at least partially enclose a control board and a battery terminal; a trigger control arranged to protrude from a front side of the handle housing, the trigger control configured to send a signal for controlling the motor; and a user interface panel arranged to mount on the terminal housing adjacent to the control board, the user interface panel configured to provide user interface for selection of at least two operation modes, the at least two operation modes include a drill mode and a hammer mode.

Alternatively, a mode switch at least partially enclosed within the main housing may be provided and configured to rotate between a first position corresponding to the hammer mode and a second position corresponding to the drill mode. The mode switch may include an internal ring arc-shaped structure having at least one permanent magnet mounted thereon; a slider arranged to extend radially from the ring arc-shaped structure to protrude from the main housing for actuation by a user; and a control board arranged adjacent to the ring arc-shaped structure and comprising a first Hall sensor and a second Hall sensor mounted thereon, the first Hall sensor mounted in a position which is aligned with the permanent magnet when the mode switch is in the first position, the second Hall sensor mounted in a position which is aligned with the permanent magnet when the mode switch is in the second position

According to a fourth aspect of the present invention, a power tool is provided. The power tool may include a working component configured to rotate around a working axis; a motor arranged on the working axis on a rear side of the working component and configured to drive an output shaft to rotate; a transmission arranged on the working axis between the motor and the working component, configured to connect the output shaft of the motor with the working component; a main housing configured to at least partially enclose the motor and the transmission, the main housing having a long axis parallel to the working axis, wherein the working component is at least partially enclosed at a front end of the main housing; a handle housing extending from the main housing in a direction away from the working axis; a trigger control arranged to protrude from a front side of the handle housing, the trigger control configured to generate at least a first signal corresponding to a linear position of the trigger; and a controller configured to: determine whether the trigger is in a rest position or an actuated position; and transmit a PWM control signal to activate the motor in response to determining that the trigger is in an actuated position; wherein the PWM control signal includes a duty ratio which corresponds to the linear position of the trigger.

The PWM control signal may be proportional to a linear travel of the trigger from the rest position.

The trigger control may be configured to generate a second signal to indicate whether the trigger is in the rest position or an actuated position; and the controller may be configured to determine whether the trigger is in the rest position or an actuated position based on the second signal.

The controller may be further configured to determine whether the power tool meets one or more preset conditions in response to determining that the trigger is in an actuated position and transmit the PWM control signal in response to determining that the preset conditions are met.

The one or more preset conditions may include a temperature, current setting, speed setting and/or voltage setting.

Reference will now be made in detail to various embodiments of the present invention, examples of which are illustrated in the accompanying drawings. While the following describes specific embodiments, it should be understood that the following description is for illustrative purposes only. Those skilled in the art will recognize that other components and configurations may be used without departing from the subject matter and scope defined by the present invention.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended figures. Understanding that these figures depict only exemplary embodiments of the disclosure and are not therefore to be considered to be limiting of its scope, the principles herein are described and explained with additional specificity and detail through the use of the accompanying figures.

Preferred embodiments of the present disclosure will be explained in further detail below by way of examples and with reference to the accompanying Figures, in which:-
Fig. 1A shows a schematic diagram of a device according to an embodiment of the present invention.
Fig. 1B shows a schematic diagram of a device according to another embodiment of the present invention.
Fig. 2A shows a schematic diagram of an electronic clutch dial assembly of the device shown in Fig. 1A.
Fig. 2B shows a schematic diagram of an electronic clutch dial assembly of the device shown in Fig. 1B.
Fig. 3A shows a cross-sectional view of a speed switch assembly of the device shown in Fig. 1A.
Fig. 3B shows a cross-sectional view of a speed switch assembly of the device shown in Fig. 1B.
Fig. 4A shows a schematic diagram of a user interface panel according to another embodiment of the present invention.
Fig. 4B shows a schematic diagram of a mode switch assembly according to another embodiment of the present invention.
Fig. 5A shows a perspective view of the user interface panel shown in Fig. 4A.
Fig. 5B shows a perspective view of the mode switch assembly shown in Fig. 4B.
Figs. 6 to 9 show control flowcharts of a device under different preset conditions according to yet another embodiment of the present invention, respectively.
Fig. 10 shows a state diagram of another example of the pulse PWM duty ratio steps according to Figs. 6 and 9.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the spirit and scope of the disclosure.

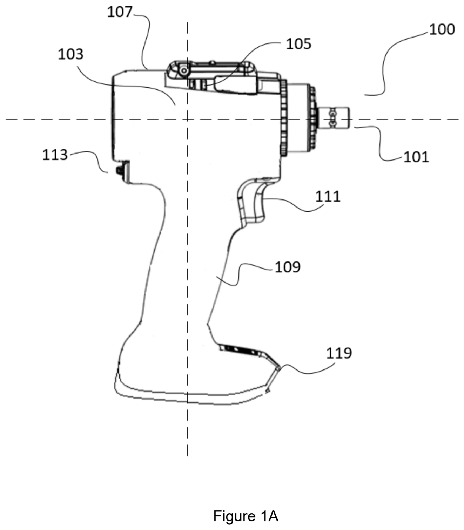

Referring to Fig. 1A, a schematic diagram of a device according to an embodiment of the present invention is shown. The power tool 100 includes a working component 101, a motor 103, a transmission 105, a main housing 107, a handle housing 109, and a trigger control 111.

The working component 101 of the power tool 100 is configured to rotate around a working axis, for example, the horizontal axis shown in Fig. 1A. This rotation may be clockwise or counter-clockwise as viewed from a front view of the power tool 100. Switching of the rotation direction may be controlled by a separate rotation direction component (not shown).

The motor 103 is arranged on the horizontal working axis on a rear side of the working component 101 and is configured to drive an output shaft to rotate. The transmission 105, arranged on the working axis between the motor 103 and the working component 101, connects the output shaft of the motor 103 with the working component 101. The power tool 100 has a main housing 107 configured to at least partially enclose the motor 103 and the transmission 105. The main housing 107 has a long axis parallel to the horizontal working axis, and it can be understood that the working component 101 is at least partially enclosed at a front end of the main housing 107. The handle housing 109 extends from the main housing 107 in a direction away from the horizontal working axis.

The power tool 100 includes the trigger control 111 arranged to protrude from a front side of the handle housing 109. The trigger control 111 is configured to send a signal for controlling the motor 103. The trigger control 111 may be controlled to vary the power output by the motor 103 according to its pressed travel, thereby changing the operating speed of the motor 103.

The power tool 100 includes an electronic clutch dial 113 arranged to protrude from a rear end of the main housing 107 underneath the motor 103. The electronic clutch dial 113 is configured to send a signal for adjusting a torque output of the transmission 105. The electronic clutch dial 113 may be arranged to rotate about an axis perpendicular to the horizontal working axis, as shown by the longitudinal axis perpendicular to the horizontal axis in Fig. 1A.

In this way, the power tool 100 improves upon known clutch dials installed between the transmission and the working component, such as a clutch torque ring. These rotate the clutch cup cover to deform elastic components in the assembly, thereby changing the output torque.

However, such clutch dials using a mechanical structure are different from the electronic clutch dial disclosed in the present invention, as they cannot provide an automatic torque adjustment function, and any independent operation mode prevents the controller of the power tool from controlling its function, such as suspending the function of a clutch dial.

Another known clutch dial can be installed on a front face of the handle housing. It is known that the position of these clutch dials may cause mis-operation. For example, when a user operates the trigger protruding from the front side of the handle housing, they may accidentally touch the clutch dial set on the front face. Additionally, placing the clutch dial at the front position may reduce the strength of the power tool housing, for example, increasing the risk of housing breakage when the power tool is dropped.

The power tool 100 may include an LED lighting device (not shown) to assist the user in operating the power tool 100 in low-light environments.

Referring again to Fig. 1A, the handle housing 109 may include a terminal housing 119 arranged at an end of the handle housing 109 distal from the main housing 107. The terminal housing may be configured to at least partially enclose a PCBA control board and battery terminals.

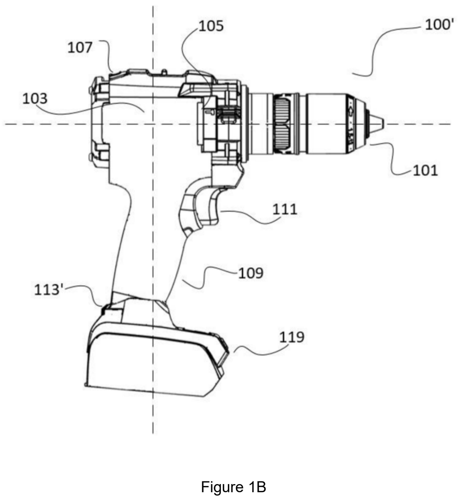

Referring to Fig. 1B, a schematic diagram of a device according to another embodiment of the present invention is shown. The power tool 100' may further include an electronic clutch dial 113' arranged to protrude from a rear face of the handle housing 109, or optionally from a side face of the handle housing 109. The electronic clutch dial 113' is configured to send a signal for adjusting a torque output of the transmission 105. The electronic clutch dial 113' may be arranged to rotate about an axis parallel to a long axis of the handle housing 109, as shown by the longitudinal axis perpendicular to the horizontal axis in Fig. 1B. The electronic clutch dial 113' may be arranged adjacent to the terminal housing 119.

Compared to placing the clutch dial on the front face of the handle housing, placing the clutch dial at the rear position the main housing or the handle housing can make full use of the compact space of the power tool and facilitates user's visual operation of the clutch dial when facing the rear face of the main housing or the handle housing.

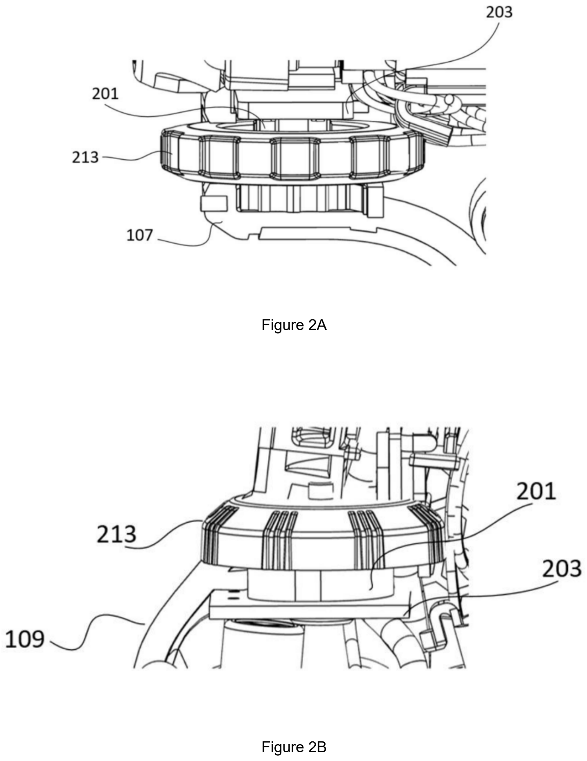

Referring to Fig. 2A, an exemplary configuration of an electronic clutch dial assembly 213 in the power tool 100 is shown. The electronic clutch dial 213 may be linked to a potentiometer or rotary encoder 201. The potentiometer or rotary encoder 201 may be configured to detect a rotation of the electronic clutch dial 213 and send the detected signal to a PCBA board 203 enclosed in the rear end of the main housing 107.

As can be understood from the above description, the output torque of the power tool 100 may be changed according to the rotational position of the electronic clutch dial 213. For example, in a commonly used drilling mode, a screw driving mode requiring higher torque adjustment accuracy may be set. In the screw driving mode, the required torque may be varied for different screw specifications, such as screws of different lengths or thicknesses. It can be understood that the drilling mode may require a relatively large torque, while the screw driving mode may require more precise and on-demand adjusted torque to drive screws of different specifications.

Referring to Fig. 2B, another exemplary configuration of an electronic clutch dial assembly 213 in the power tool 100 is shown. The potentiometer or rotary encoder 201 may be configured to detect a rotation of the electronic clutch dial 213 and send the detected signal to a PCBA board 203 enclosed in the rear end of the handle housing 109.

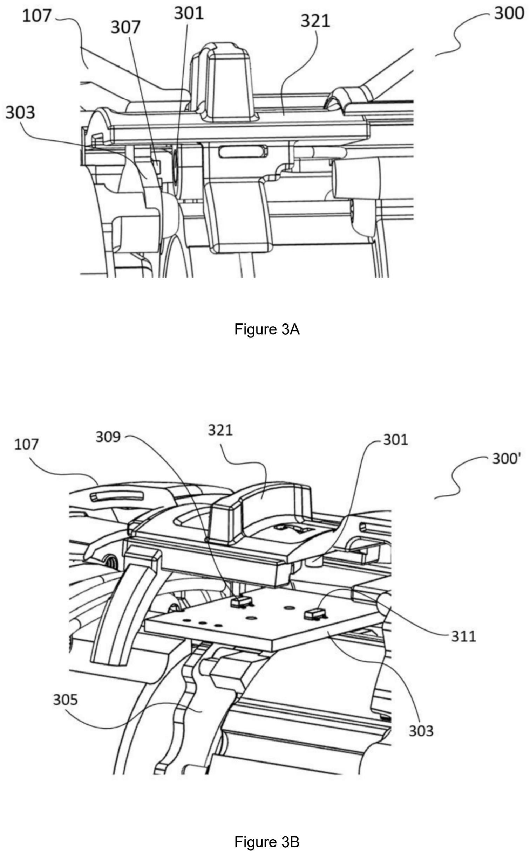

Referring to Fig. 3A, a structure of a speed switch 300 of the power tool 100 shown in Fig. 1A is shown. The speed switch 300 may be at least partially enclosed within the main housing 107. The speed switch 300 may be configured to slide between a first position corresponding to a first speed mode and a second position corresponding to a second speed mode. The speed switch 300 may include an internal structure, a slider 321, and a control board 303. At least one permanent magnet 301 may be mounted on the internal structure. The slider 321 may be arranged to extend from the internal structure to protrude from the main housing 107 for actuation by a user. The control board 303 may be arranged adjacent to the internal structure and may be fixed to the main housing 107 of the power tool 100. The control board 303 may include at least a Hall sensor 307 mounted thereon. The Hall sensor 307 may be mounted in a position which is aligned with the permanent magnet 301. When the speed switch 300 is in the first position, the permanent magnet 301 may be urged adjacent to the Hall sensor 307 with a sensor signal generated when the speed switch 300 is in the second position, the permanent magnet 301 may be urged away from the Hall sensor 307 with no sensor signal generated. The Hall sensors 307 may be mounted on the control board 303 so that the signal output can be received.

It can be understood that the speed switch of the present invention may achieve more than two speed adjustments, with a structure similar to the above, without departing from the scope defined by the present invention. For example, one or more Hall sensors may be provided. Each of the Hall sensors may generate signal corresponding to different speed settings when aligned with the permanent magnet as actuated by the operator's selection of speed switch position.

The speed switch of the power tool can detect the position of the speed switch via sensors and provide a speed mode signal to the controller of the power tool when the speed switch position is adjusted. In this way, the power tool can instantly know the currently selected speed mode based on this signal and take corresponding actions via the controller for that speed mode.

In contrast, traditional mechanical speed switches rely on mechanical transmission for speed adjustment, and the controller of the power tool often learns of the speed mode change through changes in the motion state of core components (such as the rotation of the working axis). Compared to the structure of the present invention where the speed mode is known in advance via sensors, traditional mechanical speed switches obviously cannot provide immediate feedback for speed mode changes, and this traditional method of learning the speed mode through mechanical transmission can also produce inaccurate detection results, thereby affecting further operations of the power tool.

Furthermore, the power tool 100 can provide different gear ratios in different speed modes. For example, in a low-speed mode, can provide a larger gear ratio. In different speed modes, at the same torque level setting, the output torque remains the same or similar. Therefore, the high-speed mode will have a higher current preset threshold.

Referring to Fig. 3B, another structure of a speed switch 300' of the power tool 100 shown in Fig. 1B is shown. The control board 303 may be arranged adjacent to the internal structure and may be fixed to the main housing 107 of the power tool 100. The control board 303 may include a first Hall sensor 309 and a second Hall sensor 311 mounted thereon. The first Hall sensor 309 may be mounted in a position which is aligned with the permanent magnet 301 when the speed switch 300 is in the first position, and the second Hall sensor 311 is mounted in a position which is aligned with the permanent magnet (not shown) when the speed switch 300 is in the second position. The control board 303 and the first and second Hall sensors 309, 311 can may be connected to a Hall board connection 305 via signal lines (not shown) to receive signals output by the sensors.

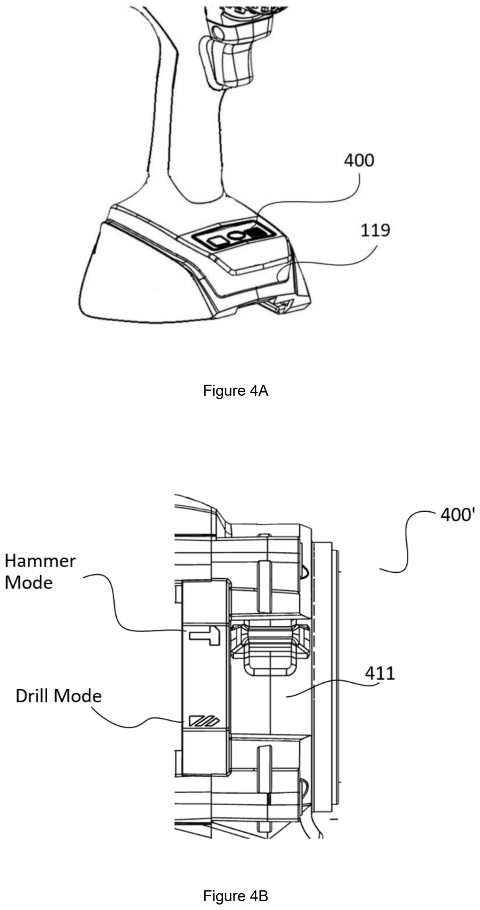

Referring to Fig. 4A, a user interface panel 400 according to an embodiment of the present invention is shown. The user interface panel 400 may be mounted on the terminal housing 119 The user interface 400 may be configured to provide a user interface for selection of at least two operation modes, including a drill mode and a hammer mode.

Referring to Fig. 4B, a mode switch assembly 400' according to another embodiment of the present invention is shown. The mode switch 400' may be at least partially enclosed within the main housing 107 and includes a slider 411, which may be configured to rotate between a first position corresponding to a hammer mode and a second position corresponding to a drill mode.

It can be understood that the user interface panel and/or the mode switch assembly can be set to other suitable modes different from the hammer mode or the drill mode without departing from the scope of the present disclosure.

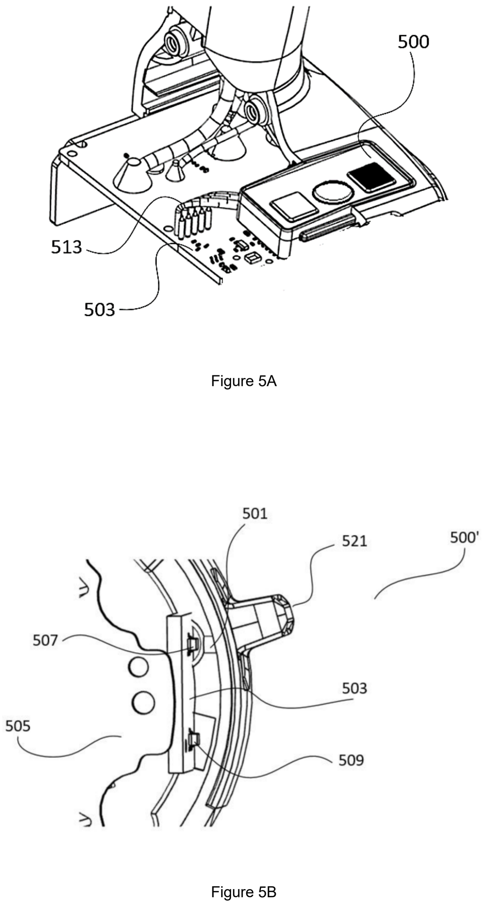

Referring to Fig. 5A, a detailed structure of a user interface panel 500 according to an embodiment of the present invention is shown. The user interface panel 500 may be mounted on the terminal housing 119 adjacent to the control board 503. The control board 503 may be connected to a user interface panel 500 via signal lines 513 to transmit signals received by the user interface panel 500 to the control board 503 of the power tool. In contrast, traditional mechanical mode switches rely on mechanical transmission for operation mode adjustment, and some traditional power tool controllers learn of the operation mode change through changes in the motion state of core components (such as the rotation of the working axis). Traditional mechanical mode switches cannot provide immediate feedback for operation mode changes, and this traditional method of learning the operation mode through mechanical transmission can also produce inaccurate detection results, thereby affecting further operations of the power tool.

Referring to Fig. 5B, a detailed structure of a mode switch 500' according to another embodiment of the present invention is shown. The mode switch 500' may include an internal ring arc-shaped structure, a slider 521, and a control board 503. The internal ring arc-shaped structure may be a complete ring structure or a continuous part of a ring structure, such as a semi-ring structure. At least one permanent magnet 501 may be mounted on the internal ring arc-shaped structure. The slider 521 may be configured to be installed on the arc-shaped structure and extend radially from the arc-shaped structure to protrude from the main housing 107 for actuation by a user. The control board 503 may be arranged adjacent to the arc-shaped structure and may include a first Hall sensor 507 and a second Hall sensor 509 mounted thereon. The first Hall sensor 507 is mounted in a position which is aligned with the permanent magnet 501 when the mode switch 500' is in the first position, and the second Hall sensor 509 is mounted in a position which is aligned with the permanent magnet (not shown) when the mode switch 500' is in the second position.

The control board 503 carrying the first and second Hall sensors can be mounted on a gearbox housing (not shown) or on the main housing 107 of the power tool. The control board 503 (i.e., the first and second Hall sensors) is connected to a Hall board 505 via signal lines (not shown) to transmit signals received by the sensors to the Hall board 505 and the controller of the power tool.

Similar to the speed switch above, the mode switch 500' of the power tool of the present invention detects the position of the mode switch via sensors and provides an operation mode signal to the controller of the power tool when the mode switch position is adjusted. In this way, the power tool can instantly know the currently selected operation mode based on this signal and take corresponding actions via the controller for that operation mode.

According to the above embodiment, since the mode switch of the power tool can send a signal of mode change in advance to the controller, the power tool can change the operating state of other components based on the received mode change signal, and/or generate subsequent operations based on states of other components that the controller can learn.

For example, when the mode selection is switched to the hammer mode, the power tool can learn via the signal of the user interface panel and/or the mode switch assembly that the operation mode has changed to the hammer mode. At this time, the controller can suspend the related functions of the electronic clutch dial, meaning the electronic clutch dial will not change the torque even if adjusted by the user. Furthermore, to adapt to the hammer mode, the controller of the power tool can instruct the motor to output full torque.

When the mode selection is switched to the drill mode, the power tool can learn via the signal of the user interface panel and/or the mode switch assembly that the operation mode has changed to the drill mode. At this time, the controller can activate the related functions of the electronic clutch dial. The user changes the torque by rotating the electronic clutch dial, causing the power tool to work with different output torques in the drill mode. For example, as mentioned above, in the screw driving mode, the torque may be changed to meet the operational requirements of screws with different specifications.

It can be understood that the torque adjustment mechanism cooperating with the mode switch is not limited to the electronic clutch dial as described above. For example, an electronic clutch that automatically adjusts torque according to different parameters may also be included within the scope defined by the present invention.

According to an embodiment of the present invention, the trigger control 111 of the power tool 100 of the present invention may be configured to generate at least a first signal corresponding to a linear position of the trigger. The trigger control 111 may be configured to determine whether the trigger is in a rest position or an actuated position and may transmit a PWM control signal to activate the motor 103 in response to determining that the trigger is in the actuated position. In particular, the PWM control signal may include a duty ratio which corresponds to the linear position of the trigger. In some examples, the PWM control signal may be proportional to a linear travel of the trigger from the rest position.

The trigger control 111 may be configured to generate a second signal to indicate whether the trigger is in the rest position or the actuated position. The controller may be configured to determine whether the trigger is in the rest position or the actuated position based on the second signal. The trigger control 111 may be further configured to determine whether the power tool 100 meets one or more preset conditions in response to determining that the trigger is in the actuated position. The trigger control 111 may transmit the PWM control signal in response to determining that the preset conditions are met.

The one or more preset conditions may refer to some preset trigger conditions (trigger thresholds), including but not limited to current setting, motor speed setting, voltage setting, temperature setting, and other conditions. For example, the preset conditions can be set in the following ways: 1) Pre-set constant values for current, motor speed, voltage, temperature. 2) An initial detected value of current, motor speed, voltage, temperature, and/or plus a pre-set constant value. The initial detected value refers to the current, motor speed, voltage, temperature, etc. detected by a sensor when the trigger of the power tool 100 is pressed.

The power tool 100 of the present invention can set different application scenarios through the following single input condition or a combination of two or more input conditions: the pressed travel depth of the trigger, the position of the speed switch, the position of the mode switch, and preset conditions (current, speed, voltage, temperature, etc.). The output modes of the power tool 100 may include speed closed-loop control or pulse output mode, etc.

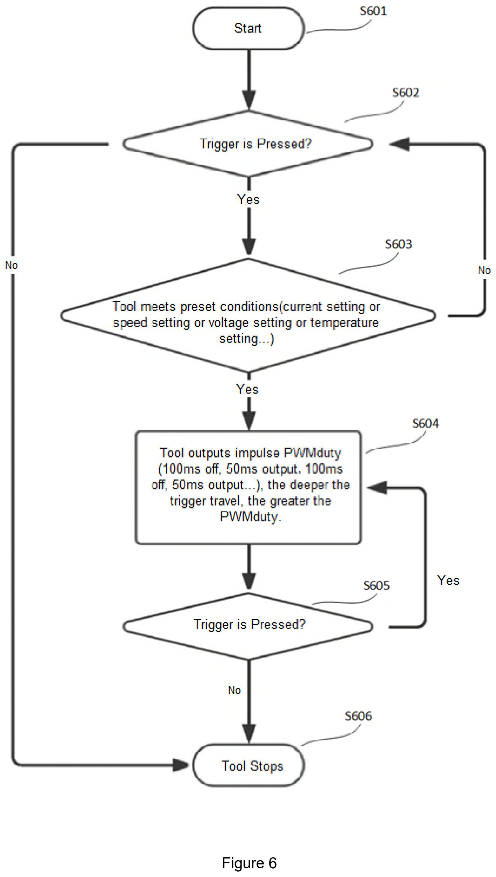

Referring to Figs. 6 to 9, control flow charts for generating different output modes by the power tool under combinations of the different input conditions according to yet another embodiment of the present invention are shown respectively.

Referring to Fig. 6, the power tool can output a pulse PWM duty ratio based on the switch state or the pressed travel degree of the trigger after starting operation and meeting preset conditions.

In step S601, the user starts operating the power tool.

In step S602, it is detected whether the trigger is pressed, i.e., whether the trigger control releases a signal.

If it is detected that the trigger is pressed, proceed to step S603, where the controller of the power tool determines whether preset conditions are met, i.e., whether relevant parameters reach preset thresholds, for example, current setting, speed setting, voltage setting, temperature setting, etc.

If it is determined that the preset conditions have been met, proceed to step S604, where the power tool outputs a pulse PWM duty ratio according to the pressed travel of the trigger. For example, output is turned off in a first time period of 100 ms, a pulse PWM duty ratio is output in a second time period of 50 ms, output is turned off in a third time period of 100 ms, a pulse PWM duty ratio is output in a fourth time period of 50 ms, and so on. In one example, when the pressed travel of the trigger is deeper, the PWM duty ratio is larger.

At the same time, in step S605, it is continuously detected whether the trigger continues to be pressed.

If it is detected that the trigger is not pressed, proceed to step S606, and the power tool stops operating.

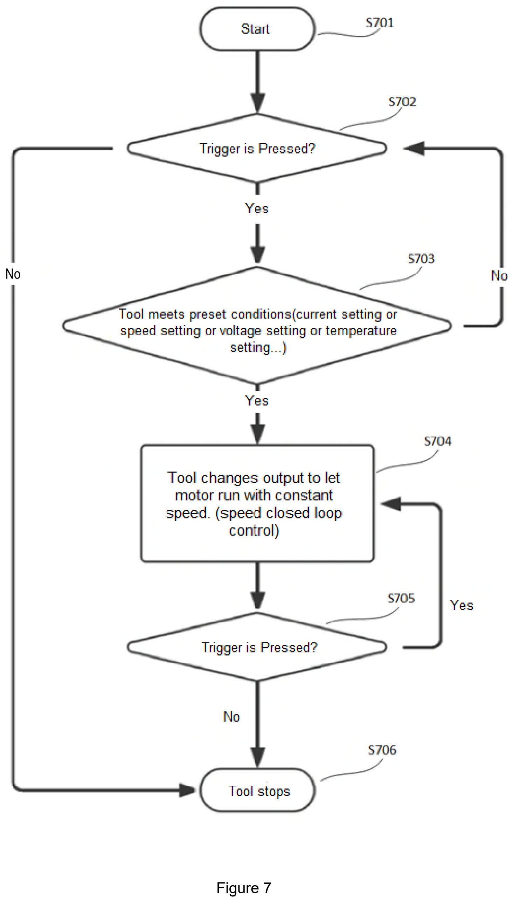

Referring to Fig. 7, the power tool can operate at a constant speed, i.e., closed-loop speed control (fixed speed control), based on the switch state or pressed travel degree of the trigger after starting operation and meeting preset conditions. Closed-loop speed control refers to controlling the power tool to produce output so that the motor can operate at a constant speed.

In step S701, the user starts operating the power tool.

In step S702, it is detected whether the trigger is pressed, i.e., whether the trigger control releases a signal.

If it is detected that the trigger is pressed, proceed to step S703, where the controller of the power tool determines whether preset conditions are met, i.e., whether relevant parameters reach preset thresholds, for example, current setting, speed setting, voltage setting, temperature setting, etc.

If it is determined that the preset conditions have been met, proceed to step S704, where the tool changes output to cause the motor to operate at a constant speed, i.e., speed closed-loop control.

At the same time, in step S705, it is continuously detected whether the trigger continues to be pressed.

If it is detected that the trigger is not pressed, proceed to step S706, and the power tool stops operating.

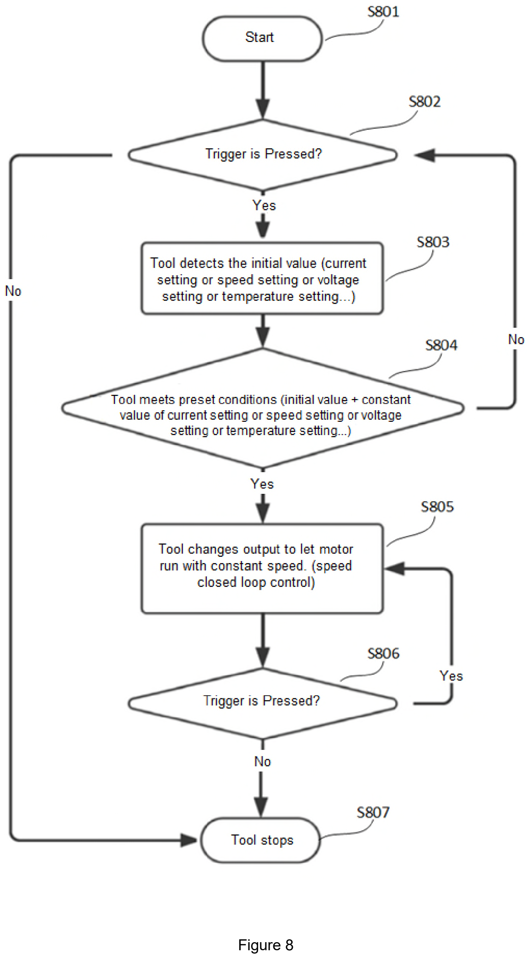

Referring to Fig. 8, the power tool has initial parameter values when starting operation. Considering these initial values and upon determining that the power tool meets preset conditions, it operates at a constant speed based on the switch state or pressed travel degree of the trigger.

In step S801, the user starts operating the power tool.

In step S802, it is detected whether the trigger is pressed, i.e., whether the trigger control releases a signal.

If it is detected that the trigger is pressed, proceed to step S803, where the controller of the power tool first detects initial values of parameters. These parameters correspond to the preset conditions to be detected during operation, such as current setting, speed setting, voltage setting, temperature setting, etc.

In step S804, the controller of the power tool determines whether preset conditions are met, i.e., whether relevant parameters reach preset thresholds. In one example, the preset threshold is the sum of the initial parameter value detected in step S803 and a preset constant value.

It can be understood that the preset threshold can be obtained by other means, not limited to the above method, such as using a single constant value as the preset threshold as shown in Fig. 7. Other methods conceivable by those skilled in the art are also included in the disclosure of the present invention.

If it is determined that the preset conditions have been met, proceed to step S805, where the tool changes output to cause the motor to operate at a constant speed, i.e., speed closed-loop control.

At the same time, in step S806, it is continuously detected whether the trigger continues to be pressed.

If it is detected that the trigger is not pressed, proceed to step S807, and the power tool stops operating.

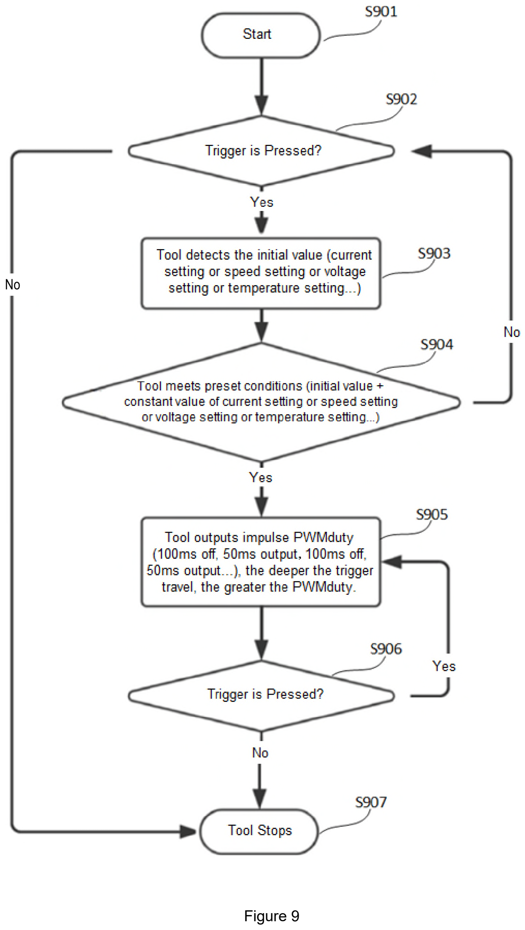

Referring to Fig. 9, the power tool has initial parameter values when starting operation. Considering these initial values and upon determining that the power tool meets preset conditions, it outputs a pulse PWM duty ratio based on the switch state or pressed travel degree of the trigger.

In step S901, the user starts operating the power tool.

In step S902, it is detected whether the trigger is pressed, i.e., whether the trigger control releases a signal.

If it is detected that the trigger is pressed, proceed to step S903, where the controller of the power tool first detects initial values of parameters. These parameters correspond to the preset conditions to be detected during operation, such as current setting, speed setting, voltage setting, temperature setting, etc.

In step S904, the controller of the power tool determines whether preset conditions are met, i.e., whether relevant parameters reach preset thresholds. In one example, the preset threshold is the sum of the initial parameter value detected in step S803 and a preset constant value.

If it is determined that the preset conditions have been met, proceed to step S905, where the power tool outputs a pulse PWM duty ratio according to the pressed travel of the trigger. For example, output is turned off in a first time period of 100 ms, a pulse PWM duty ratio is output in a second time period of 50 ms, output is turned off in a third time period of 100 ms, a pulse PWM duty ratio is output in a fourth time period of 50 ms, and so on. In one example, when the pressed travel of the trigger is deeper, the PWM duty ratio is larger.

At the same time, in step S906, it is continuously detected whether the trigger continues to be pressed.

If it is detected that the trigger is not pressed, proceed to step S907, and the power tool stops operating.

The pulse output in the present invention refers to the impact (pulse) output of the power tool. This driving output is different from the commonly used continuous PWM duty ratio output because when using impact (pulse), the user of the power tool can clearly feel the periodic shutdown of the power tool during this output period (i.e., the motor runs, then the motor stops, then the motor runs again, then the motor stops again... following this pattern at a set frequency).

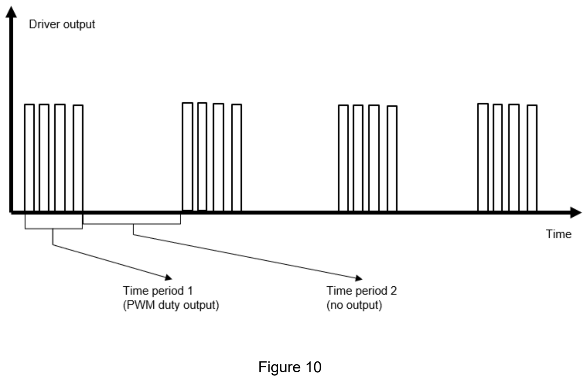

Referring to Fig. 10, a state diagram illustrating an example of the pulse PWM duty ratio step is shown. Here, time period 1 (PWM duty ratio output) is greater than or equal to 10 ms, time period 2 (no output) is greater than or equal to 10 ms, and the PWM period is less than 10 ms. During time period 1, the motor produces a PWM duty ratio output, which drives the power tool to run and lasts for several PWM cycles. During time period 2, the motor produces no output, and the power tool stops running. The time period 1 and time period 2 continue to alternate at a set frequency, thereby producing a pulse output.

It can be understood that in this pulse output mode, the travel speed of workpieces such as screws driven by the working component of the power tool is relatively slow, thereby effectively avoiding the problem of the workpiece damaging the bearing surface (such as a wood surface) during its travel.

It should be understood that the above embodiments are described by way of example only. Changes and modifications may be made to the above embodiments without departing from the present invention as defined herein.

Furthermore, although the present invention has been described in examples using language specific to structural features and/or method steps, it should be understood that the subject matter defined in the present invention is not necessarily limited to these described features or processes. For example, such functions may be arranged in different ways or performed in components other than those described herein. Instead, the features and steps described above are merely disclosed as examples of components of systems and methods within the scope defined by the present invention. The above embodiments are described by way of example only. Many variations are possible without departing from the scope of the disclosure as defined in the appended claims.

## Claims

1. A power tool (100) comprising:
a working component (101) configured to rotate around a working axis;
a motor (103) arranged on the working axis on a rear side of the working component (101) and configured to drive an output shaft to rotate;
a transmission (105) arranged on the working axis between the motor (103) and the working component (101), configured to connect the output shaft of the motor (103) with the working component (101);
a main housing (107) configured to at least partially enclose the motor (103) and the transmission (105), the main housing (107) having a long axis parallel to the working axis, wherein the working component (101) is at least partially enclosed at a front end of the main housing (107);
a handle housing (109) extending from the main housing (107) in a direction away from the working axis;
a trigger control (111) arranged to protrude from a front side of the handle housing (109), the trigger control (111) configured to send a signal for controlling the motor (103); and
an electronic clutch dial (113) arranged to protrude from a rear end of the main housing (107) underneath the motor (103), the electronic clutch dial (113) configured to send a signal for adjusting a torque output of the transmission (105).

2. The power tool (100) of claim 1, wherein the electronic clutch dial (113) is arranged to rotate about an axis perpendicular to the working axis.

3. The power tool (100) of claim 1 or claim 2, wherein the electronic clutch dial (113) is linked to a potentiometer or rotary encoder (201) configured to detect a rotation of the electronic clutch dial (113).

4. The power tool (100) of any preceding claim, wherein the handle housing (109) comprises a terminal housing (119) arranged at an end of the handle housing (109) distal from the main housing (107), the terminal housing (119) configured to at least partially enclose a control board (203) and a battery terminal.

5. A power tool (100) comprising:
a working component (101) configured to rotate around a working axis;
a motor (103) arranged on the working axis on a rear side of the working component (101) and configured to drive an output shaft to rotate;
a transmission (105) arranged on the working axis between the motor (103) and the working component (101), configured to connect the output shaft of the motor (103) with the working component (101);
a main housing (107) configured to at least partially enclose the motor (103) and the transmission (105), the main housing (107) having a long axis parallel to the working axis, wherein the working component (101) is at least partially enclosed at a front end of the main housing (107); and
a speed switch (300) at least partially enclosed within the main housing (107) and configured to slide between a first position corresponding to a first speed mode and a second position corresponding to a second speed mode;
wherein the speed switch (300) comprises:
an internal structure having at least one permanent magnet (301) mounted thereon;
a slider (321) arranged to extend from the internal structure to protrude from the main housing (107) for actuation by a user; and
a control board (303) arranged adjacent to the internal structure and comprising a Hall sensor (309) mounted thereon in a position which is aligned with the permanent magnet (301), wherein when the speed switch (300) is in the first position, the permanent magnet (301) is urged adjacent to the Hall sensor (309) with a sensor signal generated, and when the speed switch (300) is in the second position, the permanent magnet (301) is urged away from the Hall sensor (309) with no sensor signal generated.

6. A power tool (100) comprising:
a working component (101) configured to rotate around a working axis and configured to operate in a drill mode or a hammer mode;
a motor (103) arranged on the working axis on a rear side of the working component (101) and configured to drive an output shaft to rotate;
a transmission (105) arranged on the working axis between the motor (103) and the working component (101), configured to connect the output shaft of the motor (103) with the working component (101);
a main housing (107) configured to at least partially enclose the motor (103) and the transmission (105), the main housing (107) having a long axis parallel to the working axis, wherein the working component (101) is at least partially enclosed at a front end of the main housing (107);
a handle housing (109) extending from the main housing (107) in a direction away from the working axis, the handle housing (109) comprises a terminal housing (119) arranged at an end of the handle housing (109) distal from the main housing (107), the terminal housing (119) configured to at least partially enclose a control board (203) and a battery terminal;
a trigger control (111) arranged to protrude from a front side of the handle housing (109), the trigger control (111) configured to send a signal for controlling the motor (103); and
a user interface panel (400) arranged to mount on the terminal housing (119) adjacent to the control board (203), the user interface panel (400) configured to provide user interface for selection of at least two operation modes, the at least two operation modes include a drill mode and a hammer mode.

7. A power tool (100) comprising:
a working component (101) configured to rotate around a working axis;
a motor (103) arranged on the working axis on a rear side of the working component (101) and configured to drive an output shaft to rotate;
a transmission (105) arranged on the working axis between the motor (103) and the working component (101), configured to connect the output shaft of the motor (103) with the working component (101);
a main housing (107) configured to at least partially enclose the motor (103) and the transmission (105), the main housing (107) having a long axis parallel to the working axis, wherein the working component (101) is at least partially enclosed at a front end of the main housing (107);
a handle housing (109) extending from the main housing (107) in a direction away from the working axis;
a trigger control (111) arranged to protrude from a front side of the handle housing (109), the trigger control (111) configured to generate at least a first signal corresponding to a linear position of the trigger; and
a controller configured to:
determine whether the trigger is in a rest position or an actuated position; and
transmit a PWM control signal to activate the motor (103) in response to determining that the trigger is in an actuated position;
wherein the PWM control signal includes a duty ratio which corresponds to the linear position of the trigger.

8. The power tool (100) of claim 7, wherein the PWM control signal is proportional to a linear travel of the trigger from the rest position.

9. The power tool (100) of claim 7 or claim 8, wherein the trigger control (111) is configured to generate a second signal to indicate whether the trigger is in the rest position or an actuated position; and
wherein the controller is configured to determine whether the trigger is in the rest position or an actuated position based on the second signal.

10. The power tool (100) of any one of claims 7 to 9, wherein, in response to determining that the trigger is in an actuated position, the controller is further configured to determine whether the power tool (100) meets one or more preset conditions and transmit the PWM control signal in response to determining that the preset conditions are met.

11. The power tool (100) of claim 10, wherein the one or more preset conditions include a temperature, current setting, speed setting and/or voltage setting.
